# EUROPÄISCHE PATENTSCHRIFT

(11) **EP 2 895 321 B1**
(45) Veröffentlichungstag und Bekanntmachung des Hinweises auf die Patenterteilung: **23.03.2016**
(21) Anmeldenummer: 14723730.9
(22) Anmeldetag: 11.04.2014
(51) Int. Cl.: B31D 3/02, B29D 99/00, B32B 3/12

(54) **BESCHICHTUNGSVORRICHTUNG SOWIE BESCHICHTUNGSVERFAHREN**
COATING APPARATUS AND COATING METHOD
DISPOSITIF ET PROCÉDÉ DE REVÊTEMENT

(30) Priorität: 29.04.2013 DE 102013104318
(43) Veröffentlichungstag der Anmeldung: 22.07.2015
(73) Patentinhaber: Iseli, Fredy, 8592 Uttwil (CH)
(72) Erfinder: Iseli, Fredy, 8592 Uttwil (CH)
(74) Vertreter: Wagner, Kilian
(86) Internationale Anmeldenummer: PCT/EP2014/057425
(87) Internationale Veröffentlichungsnummer: WO 2014/177370

(56) Entgegenhaltungen:
- EP-A1- 0 622 174
- US-A- 2 553 054
- US-A- 3 033 734

## Beschreibung

Die Erfindung betrifft eine Beschichtungsvorrichtung gemäß dem Oberbegriff des Anspruchs 1 zum Beschichten von jeweils eine Vielzahl von sich in einer Axialrichtung erstreckenden Kanälen aufweisenden Zellstoff-Wabenverbundtragteilen mit einer Imprägnierbeschichtung zum Erhöhen der Feuer- und/oder Wasserfestigkeit und/oder der mechanischen Stabilität. Ferner betrifft die Erfindung ein Beschichtungsverfahren zum Beschichten derartiger Zellstoffplatten gemäß dem Oberbegriff des Anspruchs 11.

Bekannt sind Wabenverbundtragteile, insbesondere zum Einsatz als Wabenkernmaterial in Verbundplatten, wobei die Waben des Wabenverbundstragteils von einer Vielzahl von sich in einer Axialrichtung erstreckenden Kanälen gebildet werden, welche in der Regel von Trägerpapieren sowie mit den Trägerpapieren verleimten Wellpapieren umfangsseitig begrenzt sind.

Ein Verfahren zum Herstellen von Wabenverbundtragteilen ist beispielsweise in der DE 103 05 747 A1 beschrieben. Weitere Wabenverbundtragteile (Wellkartontragteile) sind in der DE 196 54 672 A1 sowie der DE 198 20 493 A1 gezeigt.

Zum weiteren Stand der Technik werden die DE 20 2010 003 580 U1, die DE 196 54 672 A1 sowie die WO 2008/076404 A2 genannt.

Aus der DE 36 31 185 A1 ist ein Verfahren zum Herstellen von Papierwabenverbund-Formkörpern bekannt, bei dem ein Papierwabenteil, d.h. ein Wabenverbundtragteil mit einer Vielzahl von axialen Kanälen mit einem aushärtbaren flüssigen Kunstharzsystem beschichtet wird. Zum Beschichten wird das Wabenverbundtragteil in ein mit dem Kunstharzsystem gefülltes Tauchbecken eingetaucht, wobei der Raum über dem Tauchbecken evakuiert wird. Die zur Anwendung kommenden Kunstharzsysteme erhöhen zwar möglicherweise die Wasserfestigkeit, jedoch nicht die Feuerfestigkeit des Wabenverbundtragteils. Darüber hinaus stellt sich eine großtechnische Anwendung des bekannten Verfahrens als schwierig dar, da nur batchweise verfahren werden kann. Auch lassen sich die Kanäle des Wabenverbundtragteils mit dem bekannten Verfahren nicht mit wasserhaltigen Imprägniermitteln beschichten, da die Papierwaben das Wasser aufsaugen, dadurch Festigkeit verlieren und die Wabenstruktur weich wird und dadurch zerfällt.

Die Nachteile des aus der DE 36 31 185 A1 bekannten Verfahrens hat der Anmelder mit dem in der WO 2012/045653 A1 beschriebenen Verfahren überwunden. Aus der Druckschrift ist es bekannt, die Zellstoff-Wabenverbundtragteile in einer Vakuumbeschichtungskammer mit Imprägniermittel zu beschichten, wobei in der Vakuumbeschichtungskammer das Imprägniermittel verwirbelt wird. Dieses Verfahren hat sich bewährt. Es bestehen jedoch Bestrebungen nach einfacheren und kostengünstigeren Beschichtungsmöglichkeiten. Insbesondere soll der Durchsatz, d.h. die Menge an beschichteten Zellstoff-Wabenverbundtragteilen pro Zeiteinheit erhöht werden.

Aus der WO 86/02039 ist ein Verfahren zum Herstellen eines Leichtbaukerns bekannt, wobei die Kanäle des Leichtbaukerns von Papierrollen gebildet sind. Die Axialkanäle werden imprägniert, indem von oben Imprägnierharz, d.h. kein anorganisches Imprägniermittel eingefüllt wird. Wie in der Druckschrift beschrieben ist, bleibt eine große Menge von Imprägnierharz an den zu benetzenden Oberflächen haften. Überschüssiges Harz läuft nach unten aus. Die bekannte Beschichtungsvorrichtung arbeitet nicht kontinuierlich sondern im Batch-Verfahren, was nachteilig im Hinblick auf die Beschichtungsgeschwindigkeit ist. Darüber hinaus ist die Beschichtungsvorrichtung bzw. das bekannte Beschichtungsverfahren nicht zum Beschichten mit zementhaltigen Imprägnierbeschichtungen geeignet, da diese die viel dünneren Kanäle von Wellpappe-Wabenverbundtragteilen verstopfen und/oder aufweichen würden.

Aus der WO 2008/094966 A1 ist es bekannt, eine Wabenstruktur mit einem thermo-expandierbaren (Schaumpräkusor) Material zu beschichten. Bei einer ersten Verfahrensvariante wird die Wabenstruktur entlang eines "Wasserfalls" transportiert, mit welchem die Kanäle mit einem Schaumpräkusor geflutet werden, der wiederum mit Druckluft ausgeblasen wird. Eine solche Vorgehensweise ist nur mit dem beschriebenen Schaumbeschichtungsmaterial, welches eine geringe Dichte und eine hohe Viskosität aufweist, möglich. Die Kanäle würden bei der Verwendung einer Zementbeschichtung zwangsläufig verstopfen. Gemäß einer alternativen Ausführungsform wird die Wabenstruktur fest positioniert und der "Wasserfall" mit dem Schaumpräkusor relativ zum Wabenkörper bewegt. Auch hier wird Druckgas zum Ausblasen von überschüssigem Kunststoff-Beschichtungsmaterial verwendet.

Die bekannten Verfahren sind nicht zur Beschichtung von Zellstoff-Wabenverbundtragteilen mit einer Imprägnierbeschichtung, insbesondere einer zementhaltigen Imprägnierbeschichtung zum Erhöhen der Feuer- und Wasserfestigkeit und/oder der mechanischen Stabilität geeignet.

Zusätzlich wird auf die US 5,462,623 und die WO 2008/122616 verwiesen.

Die EP 0 622 174 A1 beschreibt ein gattungsgemäßes Beschichtungsverfahren, bei welchem Fördermittel zum Einsatz kommen, mit denen die Wabenverbundtragteile in einer Förderrichtung entlang einer Befüllstation transportierbar sind, mittels welcher Imprägniermittel von oben in die Kanäle der Wabenverbundtragteile einfüllbar sind.

Die US 3,033,734 A beschreibt ein Verfahren zum Befüllen von Kanälen von Wabenkörpern, wobei eingefüllte Flüssigkeit in den Kanälen zurückgestaut wird. Bei dem bekannten Verfahren handelt es sich um ein diskontinuierliches Verfahren.

Aus der US 2,553,054 A ist es bekannt ein Wabenverbundtragteil in ein mit Flüssigkeit gefülltes Behältnis unterzutauchen.

Ausgehend von dem vorgenannten Stand der Technik liegt der Erfindung die Aufgabe zugrunde, ein einfaches durchführbares und robustes Verfahren zur Beschichtung von einer Vielzahl von sich in einer Axialrichtung erstreckenden Kanälen aufweisenden Zellstoff-Wabenverbundtragteilen anzugeben, welches sich durch einen hohen Durchsatz auszeichnet. Bevorzugt soll auf eine vor allem im Betrieb vergleichsweise kostenintensive Vakuumbeschichtungskammer verzichtet werden können. Ferner besteht die Aufgabe darin, eine entsprechend verbesserte Beschichtungsvorrichtung anzugeben.

Diese Aufgabe wird hinsichtlich der Beschichtungsvorrichtung mit den Merkmalen des Anspruchs 1 und hinsichtlich des Beschichtungsverfahrens mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen verfahrensgemäß offenbarte Merkmale als vorrichtungsgemäß offenbart gelten und beanspruchbar sein. Ebenso sollen vorrichtungsgemäß offenbarte Merkmale als verfahrensgemäß offenbart gelten und beanspruchbar sein.

Der Erfindung liegt der Gedanke zugrunde, die Kanäle der Zellstoff-Wabenverbundtragteile von oben, bevorzugt ausschließlich schwerkraftbedingt zu befüllen, insbesondere indem Imprägniermittel in die Kanäle von oben eingegossen wird, noch weiter bevorzugt derart, dass die zu beschichtenden Zellstoff-Wabenverbundtragteile mit Hilfe von Fördermitteln bevorzugt bei Atmosphärendruck durch einen Gießvorhang an einer Befüllstation transportiert werden, wobei eine vollumfängliche Beschichtung dadurch gewährleistet wird, dass das Abfließen des Imprägniermittels aus den Kanälen nach unten im Befüllbereich verhindert oder zumindest (im Vergleich zu einer Anordnung ohne entsprechende Rückstaumittel) verlangsamt wird, derart, dass sich das Imprägniermittel in den Kanälen rückstaut, bevorzugt bis zur Oberseite der Zellstoff-Wabenverbundtragteile, d.h. bis auf die Seite der Zellstoff-Wabenverbundtragteile von der aus die Kanäle befüllt werden. Das Beschichtungsverfahren verläuft kontinuierlich, d.h. es werden laufende Zellstoff-Wabenverbundtragteile nachgefördert, so dass die Einwirkzeit des Imprägniermittels bzw. die vollständige Befüllung der Kanäle durch Rückstau zeitlich begrenzt ist, da die Zellstoff-Wabenverbundtragteile nach der Befüllstation in eine Entleerungsstation gelangen, in der überschüssiges Imprägniermittel, insbesondere schwerkraftbedingt, wieder nach unten durch die Kanäle ausströmen kann. Durch die Erfindung wird also eine kontinuierlich arbeitende Beschichtungsvorrichtung geschaffen bzw. ein Beschichtungsverfahren vorgeschlagen, bei welchem, bevorzugt unter Atmosphärendruck Imprägniermittel von oben in die, bevorzugt senkrecht zu einer Förderrichtung ausgerichteten Kanäle einströmt und in diesen für begrenzte Zeit, bis zum Passieren entsprechender Rückstaumittel zurückgestaut wird, bevorzugt derart, dass die Kanäle vollumfänglich beschichtet werden, was dadurch erreicht werden kann, dass das Imprägniermittel zumindest bis zur Oberkante der Kanäle zurückgestaut wird, bevorzugt sogar darüber hinaus, d.h. besonders zweckmäßig ist es, wenn die Fördergeschwindigkeit so auf die Befüllgeschwindigkeit, d.h. die Fließgeschwindigkeit des Imprägniermittels in die Kanäle hinein abgestimmt ist, dass sich Imprägniermittel für eine gewisse Zeit auf der Oberseite der Zellstoff-Wabenverbundtragteile anstaut. Dadurch, dass das Zellstoff-Wabenverbundtragteil, insbesondere kontinuierlich, ganz besonders bevorzugt während des Befüllvorgangs weiter in Förderrichtung bewegt wird hin zu einer Entleerungsstation ist die zeitliche Einwirkung des Imprägniermittels in gefüllten Kanälen gering, d.h. die Gefahr eines unzulässig starken Aufweichens der Zellstoff-Wabenverbundtragteile und damit eine Beschädigung der Wabenstruktur wird mit Vorteil vermieden.

Erfindungsgemäß sind weiterhin mit Vorteil an der Entleerungsstation Vibrationsmittel vorgesehen, mit denen die Zellstoff-Wabenverbundtragteile, deren Kanäle zumindest abschnittsweise noch mit Imprägniermittel gefüllt sind in Vibration versetzbar sind, um den Entleerungsvorgang zu unterstützen, insbesondere zu beschleunigen. Als besonders vorteilhaft hat es sich erwiesen, wenn die Imprägniermittel mindestens eine Rolle anordnen, die noch weiter bevorzugt unterhalb eines Förderbandes zum Transportieren der Wabenkörper angeordnet ist, um hierdurch ein fakultatives Förderband der Fördermittel in Vibration zu versetzen, auf welche die Zellstoff-Wabenverbundtragteile in der Förderrichtung transportiert werden. Selbstverständlich ist es auch denkbar unmittelbar die Zellstoff-Wabenverbundtragteile mit einer Vibrationsrolle zu beaufschlagen.

Wie erwähnt ist es besonders bevorzugt, wenn die Befüllstation derart ausgebildet ist, dass ein sich quer zur Förderrichtung erstreckender Gießvorhang gebildet wird, in welchem Imprägniermittel nach unten strömt, wobei die Zellstoff-Wabenverbundtragteile mit Hilfe von Fördermitteln durch diesen Gießvorhang hindurch transportiert werden.

Insgesamt wird ein vergleichsweise kostengünstige Vorrichtung sowie ein kostengünstig realisierbares Verfahren vorgeschlagen, dass sich im Vergleich zu bekannten Verfahren durch einen hohen Durchsatz und einen geringen Energieverbrauch auszeichnet.

Bevorzugt handelt es sich bei dem Imprägniermittel um ein Zement-Wasser-Gemisch, d.h. um einen Zementleim, insbesondere umfassend Mikrozement. Zusätzlich oder alternativ können andere, vorzugsweise anorganische Suspensionen eingesetzt werden, die bevorzugt wasserhaltig sind.

Bevorzugt sind die Zellstoff-Wabenverbundtragteile zumindest näherungsweise quaderförmig und weisen eine Länge in der Förderrichtung und eine Breite senkrecht hierzu auf, die größer ist als die Höhenerstreckung, gemessen in Richtung der Längserstreckung der senkrecht zur Förderrichtung und senkrecht zur Breitenerstreckung verlaufenden Axialkanäle. Bevorzugt beträgt die Höhe der Zellstoff-Wabenverbundtragteile zwischen 5cm und 35cm, ganz besonders bevorzugt zwischen 10cm und 30cm.

Anstelle von quaderförmigen Zellstoff-Wabenverbundtragteilen sind auch beispielsweise zylinderscheibenartige Zellstoff-Wabenverbundtragteile mit dem erfindungsgemäßen Verfahren bzw. der erfindungsgemäßen Beschichtungsvorrichtung beschichtbar.

Im Hinblick auf die Ausgestaltung des Wabenverbundtragteils gibt es unterschiedliche Möglichkeiten. Wesentlich ist, dass es sich um einen axiale Kanäle aufweisenden Wabenkörper aus Zellstoff, insbesondere Papier oder Pappe handelt. Dieser kann in an sich bekannter Weise auf unterschiedliche Arten hergestellt werden, beispielsweise durch das Miteinander-Verleimen mehrerer Wellpapplagen. Alternativ ist das Wabenverbundtragteil aus einem sogenannten expandierten Wabenkörper ausgebildet, d.h. aus einem auseinanderziehbaren Wabenelement hergestellt, wobei sich grundsätzlich Kraftlinerpapiere, Testlinerpapiere oder Schrenzpapiere eignen.

Wie zuvor angedeutet ist es besonders zweckmäßig, wenn das Imprägniermittel, vorzugsweise ein mit Wasser gemischter Zement, insbesondere ein Zementgemisch, besonders bevorzugt ein Gemisch aus Mikrozementen umfasst und/oder Wasserglas und/oder anorganische Suspensionen, vorzugsweise ein Gemisch aus Wasser mit einem anorganischen Bindemittel, wie beispielsweise Zement oder Kalk.

Besonders zweckmäßig ist es die Zellstoff-Wabenverbundtragteile für die Beschichtung in der Befüllstation vorzubereiten, indem die Zellstoff-Wabenverbundtragteile in der Förderrichtung vor der Befüllstation an einer Befeuchtungsstation vorbefeuchtet werden, insbesondere indem die Kanäle, d.h. die Innenumfangswände der Kanäle mit Dampf und/oder Heißwasser beaufschlagt werden, wobei es besonders zweckmäßig ist, wenn entsprechende Sprühmittel, insbesondere Düsen im Bereich der Befeuchtungsstation in der Förderrichtung vor der Befüllstation vorgesehen sind.

Besonders zweckmäßig ist eine Ausführungsform, bei der die Fördermittel Durchgangsöffnungen aufweisen, die sich vorzugsweise senkrecht zur Förderrichtung erstrecken, wobei durch diese Öffnungen überschüssiges Imprägniermittel, insbesondere in ein Auffangbehältnis abströmen kann. Im Hinblick auf die konkrete Ausbildung der Durchgangsöffnungen gibt es unterschiedliche Möglichkeiten. So ist es denkbar als Fördermittel in Förderrichtung beabstandete Rollen vorzusehen, wobei die Durchgangsöffnungen von dem Abstand der Rollen gebildet werden. Zusätzlich oder alternativ können die Fördermittel ein Förderband umfassen, welches bevorzugt nicht als klassisches flächengeschlossenes Band ausgebildet ist, sondern in der Förderrichtung beabstandete Auflageträger umfasst, die in der Förderrichtung, insbesondere an ihren seitlichen Endbereichen miteinander befestigt sind, wobei das Imprägniermittel durch die Abstandsspalte zwischen zwei in der Förderrichtung benachbarten Auflageträgern abströmen kann. Denkbar ist auch ein Lochband oder dergleichen Fördermittel, welches einen Durchlass von Imprägniermittel von oben nach unten zulässt.

Auch im Hinblick auf die konkrete Ausbildung der Rückstaumittel zum Anstauen bzw. Rückstauen des Imprägniermittels in den Kanälen im Bereich der Befüllstation gibt es unterschiedliche Möglichkeiten. Bevorzugt umfassen die Rückstaumittel ein plattenartiges Element, beispielsweise aus Metall, d.h. ein Rückstaublech. Die Rückstaumittel sind bevorzugt also als ein Flächenelement ausgebildet, welches sich in einem Bereich unterhalb der über dieses hinweg transportierten Zellstoff-Wabenverbundtragteile befindet. Im Hinblick auf die Anordnung gibt es wieder unterschiedliche Möglichkeiten. So ist es denkbar, dass die Zellstoff-Wabenverbundtragteile unmittelbar über die Rückstaumittel gleiten. Alternativ ist es möglich und bevorzugt, wenn sich die Rückstaumittel in einem Bereich unterhalb der Fördermittel befinden, derart, dass das Imprägniermittel durch die Fördermittel hindurch nach oben in die Kanäle hinein aufstaubar ist. Mit "unterhalb der Fördermittel" wird dabei auch eine Ausführungsform verstanden, bei der es sich um endlose Fördermittel, insbesondere bandförmige Fördermittel handelt, die von einem Endpunkt einer Förderstrecke wieder zurück zu einem Anfangsbereich verlaufen und bei der sich die Rückstaumittel unterhalb des in Förderrichtung bewegten Abschnitts, jedoch überhalb des zurücklaufenden Abschnitts befinden.

Wie bereits erwähnt ist es bevorzugt, mindestens ein Auffangbehältnis vorzusehen, um überschüssiges Imprägniermittel aufzufangen. Dieses Auffangbehältnis befindet sich bevorzugt im Bereich der Entleerungsstation. Ganz besonders bevorzugt erstreckt sich das Auffangbehältnis entgegen der Förderrichtung bis zur Befüllstation, so dass bereits dort überschüssiges Imprägniermittel von dem Auffangbehältnis aufgefangen werden kann. Alternativ sind selbstverständlich mehrere Auffangbehältnisse vorsehbar. Besonders zweckmäßig ist es nun, wenn dem mindestens einen Auffangbehältnis Pumpmittel zugeordnet sind, mit denen Imprägniermittel aus dem Auffangbehältnis zum Zuführen zu den Kanälen von neu zu beschichtenden Zellstoff-Wabenverbundtragteilen abgezogen wird. Um einen dauerhaft störungsfreien Betrieb zu gewährleisten ist es bevorzugt, wenn den Fördermitteln eine (automatische) Reinigungsstation zugeordnet ist, an der die Fördermittel von anhaftendem Imprägniermittel im Durchlauf reinigbar sind. Anders ausgedrückt durchläuft der Schlauch und die Fördermittel die Reinigungsstation, in der die Fördermittel automatisch, beispielsweise mit Bürsten und/oder Hochdruckbeaufschlagung von Reinigungsfluid gereinigt werden.

Von besonderem Vorteil ist eine Ausführungsform der Beschichtungsvorrichtung, bei der das Aufgeben zu beschichtenden Zellstoff-Wabenverbundtragteilen auf die Fördermittel automatisch erfolgt, insbesondere von einem Stapel hinweg. Bevorzugt ist hierzu einem Stapel von Zellstoff-Wabenverbundtragteilen ein Hubtisch zugeordnet, von welchem die Zellstoff-Wabenverbundtragteile auf die Fördermittel verstellt, insbesondere aufgeschoben werden. Zusätzlich oder alternativ können andere Handhabungseinrichtungen, wie beispielsweise ein Roboterarm od.dgl. Aufgabeeinrichtung vorgesehen werden. Zusätzlich oder alternativ ist es bevorzugt Stapelmittel zum automatischen Stapeln von beschichteten Zellstoff-Wabenverbundtragteilen vorzusehen, wobei es besonders bevorzugt ist, wenn die Zellstoff-Wabenverbundtragteile nicht unmittelbar aufeinander gestapelt werden, sondern wenn zwischen zwei benachbarten Zellstoff-Wabenverbundtragteilen eine Trennplatte, insbesondere aus Kunststoff vorgesehen wird.

Ganz besonders bevorzugt ist es, wenn die Zellstoff-Wabenverbundtragteile am Ende der Förderstrecke von Übergabemitteln übernommen werden, wobei die Übergabemittel bevorzugt derart ausgebildet sind, dass die Zellstoff-Wabenverbundtragteile, insbesondere durch das Vorwärtsschieben eines jeweils vorne gelegenen Zellstoff-Wabenverbundtragteils auf vorgenannte Trennplatten bzw. Stapelplatten transferiert, insbesondere aufgeschoben werden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: einen Ausschnitt aus einer mehrschichtigen Wabenverbundtragteil, besonders aus mehreren miteinander verleimten Wellpappelagen, die von einer einzigen oder mehreren Wellpappebahnen gebildet sein können, und
- Fig. 2:: eine stark schematisierte Seitenansicht einer nach dem Konzept der Erfindung ausgebildeten Beschichtungsvorrichtung.

In den Figuren sind gleiche Elemente und Elemente mit der gleichen Funktion mit den gleichen Bezugszeichen gekennzeichnet.

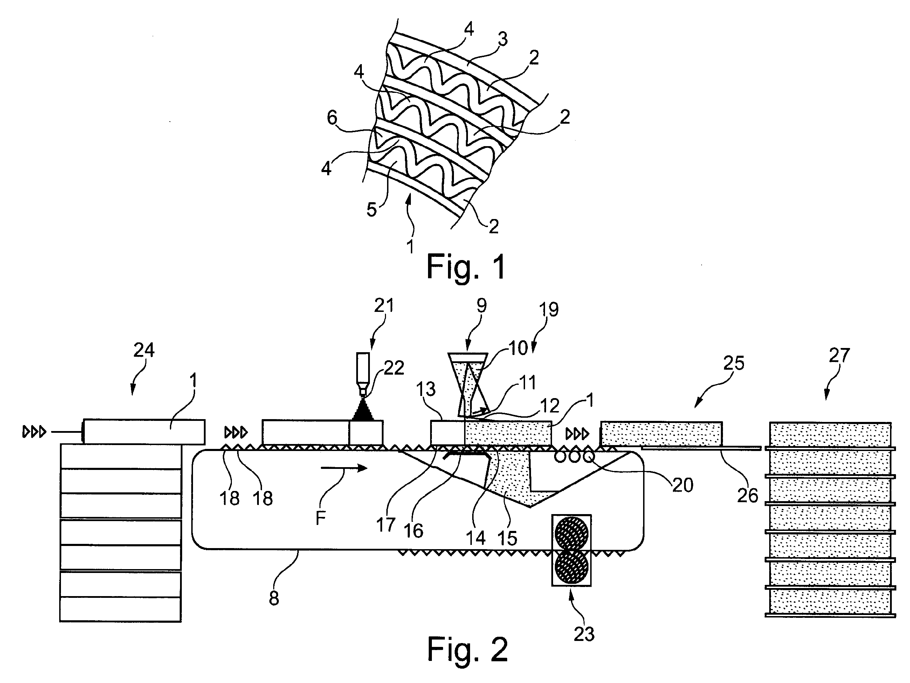

In Fig. 1 ist eine Draufsicht auf einer Flächenseite eines Zellstoff- Wabenverbundtragteils 1 (hier beispielhaft ein Wellpappewabenkörper) gezeigt. Der gezeigte Ausschnitt besteht aus drei miteinander verleimten Lagen 2 (Schichten), wobei jede Lage 2 gebildet ist von einem flächigen Trägerpapier 3, das mit einem Wellpapier 4 unter Ausbildung von (ersten) axialen Kanälen 5 verleimt ist. Die Kanäle 5 sind also umfänglich begrenzt von dem Wellpapier 4 und dem Trägerpapier 3. Ferner umfasst jede Lage 2 (zweite) Kanäle 6, die begrenzt sind in dem gezeigten Ausführungsbeispiel von dem vorgenannten Wellpapier 4 und einem weiteren Trägerpapier, nämlich dem Trägerpapier der angrenzenden (parallelen) Lage. Bei einer alternativen, nicht dargestellten Ausführungsvariante kann jede Lage 2 auch zwei Trägerpapiere umfassen, die das Wellpapier 4 sandwichartig zwischen sich aufnehmen. In diesem Fall sind die (zweiten) Kanäle 6 von dem Papier und einem Trägerpapier 3 derselben Lage begrenzt.

Wie aus Fig. 1 zu entnehmen ist, sind die Lagen 2 gekrümmt. Dies rührt daher, dass das Zellstoff-Wabenverbundtragteil 1 durch Aufwickeln einer Wellpappebahn hergestellt wurde, beispielsweise wie in der DE 103 05 747 A1 beschrieben, d.h. die einzelnen Lagen 2 bestehen aus derselben Wellpappebahn. Bei einem alternativen Herstellungsverfahren werden die Lagen 2 von separaten Wellpappebahnenstücken gebildet, die aufeinander gelegt und miteinander verleimt werden. Wesentlich ist lediglich, dass eine Vielzahl von axialen Kanälen 5, 6 gebildet sind, die beispielsweise gemäß dem anhand von Fig. 2 beschriebenen Verfahren mit einer Imprägnierbeschichtung versehen werden.

In Fig. 2 ist stark schematisiert eine Beschichtungsvorrichtung 7 gezeigt. Diese umfasst umlaufend angetriebene Fördermittel 8, mit denen Zellstoff-Wabenverbundtragteile 1 von Bearbeitungsstation zu Bearbeitungsstation transportiert werden.

Eine Kern-Arbeitsstation ist eine Befüllstation 9, umfassend einen Vorratsbehälter 10 für Imprägniermittel 12 oberhalb der Fördermittel 8. Dem Vorratsbehälter 10 ist ein hier beispielhaft verschwenkbarer Verschluss 11 zugeordnet, nach dessen Öffnen aus dem Vorratsbehälter 10, hier ausschließlich schwerkraftbedingt unter Atmosphärendruck Imprägniermittel 12, hier ein Wasserzementgemisch, nach unten auf eine Oberseite 13 eines Zellstoff-Wabenverbundtragteils 1 ausströmen kann. Die Zellstoff-Wabenverbundtragteile 1 werden mit Hilfe der Fördermittel 8 unter dem aus dem Vorratsbehälter 10 ausströmenden Vorhang vorbeitransportiert, wobei das Imprägniermittel 12 durch axiale, in der Zeichnung nicht gezeigte und sich senkrecht zu einer Förderrichtung F von oben nach unten erstreckende Kanäle 5, 6 hindurchströmen kann bis auf die Fördermittel 8 und durch Durchgangsöffnungen 14 durch die Fördermittel 8 hindurch in ein Auffangbehältnis 15. Damit das Imprägniermittel 12 nicht unmittelbar bzw. ungebremst durch die Kanäle 5, 6 nach unten strömt sind in einem Bereich unterhalb des ausströmenden Imprägniermittelvorhangs, bzw. im Bereich der Befüllstation 9 Rückstaumittel, hier in Form eines Metallbleches vorgesehen, welches sich in einem Bereich unterhalb der Fördermittel 8 befindet und welches dafür Sorge trägt, dass sich Imprägniermittel 12 senkrecht zur Förderrichtung F in den Kanälen 5, 6 nach oben staut bis auf die Oberseite 13.

Wie aus Fig. 2 zu erkennen ist, liegen die Zellstoff-Wabenverbundtragteile 1 mit einer sich parallel zur Oberseite 13 erstreckenden Unterseite 17 auf den Fördermitteln 8 auf, genauer auf in der Förderrichtung F beabstandeten Auflageträgern 18, die zwischen sich die Durchgangsöffnungen 14 für die Imprägniermittel 12 bilden. Die Auflageträger 18 sind gelenkig in der Art eines Förderbandes bzw. einer Förderkette oder dergleichen miteinander verbunden. Aus Übersichtlichkeitsgründen sind die Auflageträger 18 nicht vollumfänglich dargestellt.

Zu erkennen ist, dass sich das Imprägniermittel 12 auch noch nach Passieren des Vorhangs auf der Oberseite 13 der Zellstoff-Wabenverbundtragteile 1 aufstaut, wobei die Zellstoff-Wabenverbundtragteile 1 nach Passieren der Rückstaumittel 16 an eine in Förderrichtung F gelegene Entleerungsstation 19 gelangen, an welcher überschüssiges Imprägniermittel 12 nach unten durch die Durchgangsöffnungen 14 hindurch in das Auffangbehältnis 15 strömen kann. Zur Unterstützung der Entleerung sind in einem Bereich unterhalb des Förderbandes bzw. der Fördermittel 8 Vibrationsrollen 20 vorgesehen, wobei anstelle von Rollen auch andere Vibrationsmittel vorgesehen sein können. Durch die vibrierenden Rollen 20 werden die Fördermittel 8 im Bereich der Entleerungsstation 19 in Schwingung versetzt und somit auch die Zellstoff-Wabenverbundtragteile 1, was zu einer schnellen und ausreichenden Entleerung der Kanäle 5, 6 von überschüssigem Imprägniermittel 12 führt.

Zu erkennen ist, dass der Befüllstation 9 eine Befeuchtungsstation 21 vorgeordnet ist, bei welcher in die Kanäle 5, 6 beispielsweise Wasserdampf oder Heißwasser zur Vorbefeuchtung mittels einer Düse 22, hier beispielhaft von oben eingesprüht wird.

Zu erkennen ist weiterhin, dass in einem unteren Rücklaufabschnitt der Fördermittel 8 eine automatisierte Reinigungsstation 23 zur Reinigung der Fördermittel 8 vorgesehen ist.

Des Weiteren ist in Fig. 2 zu erkennen, dass den Fördermitteln 8 eine Aufgabeeinrichtung 24 zum automatischen Beladen der Fördermittel 8 zugeordnet ist. Der Entleerungsstation 19 sind Übergabemittel 25 nachgeordnet, bei denen die beschichteten Zellstoff-Wabenverbundtragteile 1 auf Stapelplatten 26 überführt werden, die dann automatisiert mit Hilfe von Stapelmitteln 27 gestapelt werden. Bevorzugt umfassen die Stapelmittel 27 und/oder die Aufgabeeinrichtung 24 jeweils einen Hubtisch, so dass immer von der gleichen Höhe aus zugeführt bzw. auch die gleiche Höhe gestapelt bzw. abgeführt werden kann.

Der Ablauf ist folgendermaßen. Zunächst wird ein noch nicht beschichtetes Zellstoff-Wabenverbundtragteil 1 den Fördermitteln 8 zugeführt, von diesem dann zur Befeuchtungsstation 21 transportiert, wo die Kanäle 5, 6 vorbefeuchtet werden. Dann gelangt das Zellstoff-Wabenverbundtragteil 1 aufgrund einer kontinuierlichen Bewegung der Fördermittel F zu der Befüllstation 19, durch welche es hindurchtransportiert und dabei die Kanäle 5, 6 mit Imprägniermittel 8 gefüllt werden, wobei das Ausströmen mit Hilfe von Rückstaumitteln 16 verlangsamt wird. An einer in der Förderrichtung F nachgeordneten Entleerungsstation 19 kann überschüssiges Imprägniermittel 12 aus den Kanälen 5, 6 nach unten in ein Auffangbehältnis 15 nachströmen, aus welchem Imprägniermittel 12 wieder der Befüllstation 19 zugeführt wird. Das Entleeren wird unterstützt mit Hilfe von Vibrationsmitteln, die hier beispielhaft Rollen 20 umfassen. Danach gelangen die entleeren Zellstoff-Wabenverbundtragteile 1 zu einer Übergabeeinrichtung 25 und von dort aus zu Stapelmitteln 27, wo sie unter Zwischenanordnung von Stapelplatten 26 gestapelt werden.

### Bezugszeichen

- 1: Zellstoff-Wabenverbundtragteil
- 2: Lagen
- 3: Trägerpapier
- 4: Wellpapier
- 5: Kanäle
- 6: Kanäle
- 7: Beschichtungsvorrichtung
- 8: Fördermittel
- 9: Befüllstation
- 10: Vorratsbehältnis
- 11: Verschluss
- 12: Imprägniermittel
- 13: Oberseite
- 14: Duchgangsöffnungen
- 15: Auffangbehältnis
- 16: Rückstaumittel
- 17: Unterseite
- 18: Auflageträger
- 19: Entleerungsstation
- 20: Vibrationsmittel
- 21: Befeuchtungsstation
- 22: Düse
- 23: Reinigungsstation
- 24: Aufgabeeinrichtung
- 25: Übergabemittel
- 26: Stapelplatten
- 27: Stapelmittel

## Patentansprüche

1. Beschichtungsvorrichtung zum Beschichten von jeweils eine Vielzahl von sich in eine Axialrichtung erstreckenden Kanälen (5, 6) aufweisenden Zellstoff-Wabenverbundtragteilen (1) mit einer Imprägnierbeschichtung zum Erhöhen der Feuer- und/oder Wasserfestigkeit und/oder der mechanischen Stabilität, insbesondere ein Zement-Wasser-Gemisch und/oder eine anorganische Suspension, wobei Fördermittel (8) vorgesehen sind, mit denen die Zellstoff-Wabenverbundtragteile (1) in einer Förderrichtung entlang einer Befüllstation (9) transportier sind, die derart ausgebildet ist, dass mit dieser Imprägniermittel (12) von oben in die Kanäle (5, 6) der Zellstoff-Wabenverbundtragteile (1) einfüllbar ist,
**dadurch gekennzeichnet,**
**dass** im Bereich der Befüllstation (9) Rückstaumittel (16) vorgesehen sind entlang derer die Zellstoff-Wabenverbundtragteile transportierbar sind, und dass die Rückstaumittel (16) derart ausgebildet sind, dass das Abfließen des Imprägniermittels (12) aus den Kanälen (5, 6) nach unten verhindert oder zumindest verlangsamt wird, derart, dass sich das Imprägniermittel (12) in den Kanälen (5, 6), insbesondere bis zu einer Oberseite der der Zellstoff-Wabenverbundtragteile (1) zurückstauen kann und dass der Befüllstation (9) in der Förderrichtung eine Entleerungsstation (19) nachgeordnet ist, an der überschüssiges Imprägniermittel (12) aus den Kanälen (5, 6) der Zellstoff-Wabenverbundtragteile (1) abfließen kann, und
**dass** an der Entleerungsstation (19), vorzugsweise vibrierbare Rollen (20) umfassende, Vibrationsmittel (20) zum In-Schwingung-Versetzen der Zellstoff-Wabenverbundtragteile (1) zur Unterstützung, insbesondere Beschleunigung des Entleerungsvorgangs vorgesehen sind.

2. Beschichtungsvorrichtung nach Anspruch 1,
**dadurch gekennzeichnet,**
**dass** in der Förderrichtung vor der Befüllstation (9) eine, bevorzugt Sprühmittel umfassende, Befeuchtungsstation (21) zur Vorbefeuchtung der Kanäle (5, 6), bevorzugt mit Dampf und/oder Heißwasser, vor dem Befüllen mit dem Imprägniermittel (12) an der Befüllstation (9) vorgesehen ist.

3. Beschichtungsvorrichtung nach einem der vorhergehenden Ansprüche,
**dadurch gekennzeichnet,**
**dass** die Fördermittel (8) Durchgangsöffnungen (14) aufweisen, durch die das überschüssige Imprägniermittel (12) im Bereich der Entleerungsstation (19) nach unten strömen kann.

4. Beschichtungsvorrichtung nach einem der vorhergehenden Ansprüche,
**dadurch gekennzeichnet,**
**dass** die Fördermittel (8) in der Förderrichtung beabstandete Förderrollen und/oder ein Förderband umfassen, welches bevorzugt in Förderrichtung beabstandete Auflageträger (18) für die Zellstoff-Wabenverbundtragteile (1) umfassen.

5. Beschichtungsvorrichtung nach einem der vorhergehenden Ansprüche,
**dadurch gekennzeichnet,**
**dass** die Rückstaumittel (16) ein Flächenelement, insbesondere eine Plattenelement, bevorzugt ein Rückstaublech umfassen, welches bevorzugt unterhalb der Fördermittel (8) angeordnet ist, derart, dass das Imprägniermittel (12) durch die Fördermittel (8) hindurch in die Kanäle (5, 6) rückstaubar ist.

6. Beschichtungsvorrichtung nach einem der vorhergehenden Ansprüche,
**dadurch gekennzeichnet,**
**dass** der Entleerungsstation (19) ein, sich bevorzugt bis unter die Befüllstation (9) erstreckendes, Auffangbehältnis (15) zugeordnet ist.

7. Beschichtungsvorrichtung nach Anspruch 6,
**dadurch gekennzeichnet,**
**dass** Pumpmittel vorgesehen sind, mit denen Imprägniermittel (12) aus dem Auffangbehältnis (15) abpumpbar und der Befüllstation (9) wieder zuführbar ist.

8. Beschichtungsvorrichtung nach einem der vorhergehenden Ansprüche,
**dadurch gekennzeichnet,**
**dass** den Fördermitteln (8) eine Reinigungsstation (23) zugeordnet ist, an der die Fördermittel (8) von anhaftendem Imprägniermittel (12) im Durchlauf reinigbar sind.

9. Beschichtungsvorrichtung nach einem der vorhergehenden Ansprüche,
**dadurch gekennzeichnet,**
**dass** eine Aufgabeeinrichtung (24) zum automatischen aufgeben von zu beschichtenden Zellstoff-Wabenverbundtragteilen (1) auf die Fördermittel (8) und/oder Stapelmittel (27) zum automatischen Stapeln von beschichteten Zellstoff-Wabenverbundtragteilen (1) vorgesehen sind/ist.

10. Beschichtungsvorrichtung nach Anspruch 9,
**dadurch gekennzeichnet,**
**dass** den Stapelmittel (27) Übergabemittel (25) zugeordnet sind, mit denen beschichtete Zellstoff-Wabenverbundtragteile (1) auf Stapelplatten (26), insbesondere Kunststoffplatten von den Fördermitteln (8) anordenbar sind.

11. Beschichtungsverfahren zum Beschichten von jeweils eine Vielzahl von sich in eine Axialrichtung erstreckenden Kanälen (5, 6) aufweisenden Zellstoff-Wabenverbundtragteile (1) mit einer Imprägnierbeschichtung zum Erhöhen der Feuer- und/oder Wasserfestigkeit und/oder der mechanischen Stabilität, insbesondere ein Zement-Wasser-Gemisch und/oder eine anorganische Suspension, bevorzugt unter Verwendung einer Vorrichtung nach einem der vorhergehenden Ansprüche, wobei die Zellstoff-Wabenverbundtragteile (1) in einer Förderrichtung entlang einer Befüllstation (9) transportiert werden, an der in die Kanäle (5, 6) der Zellstoff-Wabenverbundtragteile (1), insbesondere unter Atmosphärendruck, Imprägniermittel (12) von oben, insbesondere durch Gießen, bevorzugt ausschließlich schwerkraftbedingt, eingefüllt wird,
**dadurch gekennzeichnet,**
**dass** die Zellstoff-Wabenverbundtragteile entlang von im Bereich der Befüllstation (9) vorgesehenen Rückstaumittel (16) transportiert werden, mit denen das Abfließen des Imprägniermittels (12) aus den Kanälen (5, 6) nach unten verhindert oder zumindest verlangsamt wird, derart, dass sich das Imprägniermittel (12) in den Kanälen (5, 6), insbesondere bis zu einer Oberseite der Zellstoff-Wabenverbundtragteile (1) zurückstaut und dass der Befüllstation (9) in der Förderrichtung eine Entleerungsstation (19) nachgeordnet ist, an der überschüssiges Imprägniermittel (12) aus den Kanälen (5, 6) der Zellstoff-Wabenverbundtragteile (1) abfließt, und dass die Zellstoff-Wabenverbundtragteile (1) im Bereich der Entleerungsstation (19) vibriert werden.

12. Beschichtungsverfahren nach Anspruch 11,
**dadurch gekennzeichnet,**
**dass** sich das Imprägniermittel (12) an der Befüllstation (9) in den Kanälen (5, 6) soweit zurückstaut, dass die Oberfläche der Zellstoff-Wabenverbundtragteile (1) im Befüllbereich von dem Imprägniermittel (12) bedeckt ist, bevorzugt derart, dass die Imprägniermittelhöhe auf der Oberfläche der Zellstoff-Wabenverbundtragteile (1) im Befüllbereich mindestens 0,5cm beträgt.

13. Beschichtungsverfahren nach einem der Ansprüche 11 oder 12,
**dadurch gekennzeichnet,**
**dass** an der Entleerungsstation (19) überschüssiges Imprägniermittel (12) durch Durchgangsöffnungen (14) in Fördermitteln (8) für die Zellstoff-Wabenverbundtragteile (1) nach unten strömt.

14. Verwendung einer Beschichtungsvorrichtung nach einem der Ansprüche 1 bis 10 zur Beschichtung von Zellstoff-Wabenverbundtragteilen (1) mit Imprägniermittel (12), insbesondere unter Anwendung eines Verfahrens nach einem der Ansprüche 11 bis 13.

## Claims

1. A coating device for the purpose of coating composite pulp honeycomb support elements (1), each having a multiplicity of passages (5, 6) extending in an axial direction, with an impregnation coating for the purpose of increasing the fire and/or water resistance and/or the mechanical stability, in particular a cement-water mixture and/or an inorganic suspension, wherein means of conveyance (8) are provided, with which the composite pulp honeycomb support elements (1) are transported in a direction of feed along a filling station (9), which means of conveyance are designed such that with the latter impregnation agent (12) can be filled from above into the passages (5, 6) of the composite pulp honeycomb support elements (1),
**characterised in that**
damming agents (16) are provided in the region of the filling station (9), along which the composite pulp honeycomb support elements can be transported, and **in that** the damming agents (16) are designed such that flow of the impregnation agent (12) out of the passages (5, 6) downwards is prevented, or at least slowed down, such that the impregnation agent (12) can build up in the passages (5, 6), in particular as far as an upper face of the composite pulp honeycomb support elements (1), and **in that** a draining station (19) is arranged downstream of the filling station (9) in the direction of feed, at which draining station excess impregnation agent (12) can drain out of the passages (5, 6) of the composite pulp honeycomb support elements (1), and **in that** at the draining station (19), vibration means (20), preferably comprising rollers (20) that can be vibrated, are provided for the purpose of setting the composite pulp honeycomb support elements (1) into vibration, for the purpose of aiding, in particular, accelerating, the drainage process.

2. The coating device in accordance with Claim 1, **characterised in that** a wetting station (21), preferably comprising spraying means, is provided ahead of the filling station (9) in the direction of feed, for the purpose of initially wetting the passages (5, 6), preferably with steam and/or hot water, before the filling with the impregnation agent (12) at the filling station (9).

3. The coating device in accordance with one of the preceding claims, **characterised in that** the means of conveyance (8) have passageways (14), through which the excess impregnation agent (12) can flow downwards in the region of the draining station (19).

4. The coating device in accordance with one of the preceding claims, **characterised in that** the means of conveyance (8) comprise conveyor rollers and/or a conveyor belt spaced apart in the direction of feed, which preferably comprise load-supporting bars (18) spaced apart in the direction of feed for the composite pulp honeycomb support elements (1).

5. The coating device in accordance with one of the preceding claims, **characterised in that** the damming agents (16) comprise a surface element, in particular a sheet element, preferably a damming sheet, which is preferably arranged underneath the means of conveyance (8) such that.the impregnation agent (12) can be dammed back up through the means of conveyance (8) into the passages (5, 6).

6. The coating device in accordance with one of the preceding claims, **characterised in that** a collecting vessel (15), preferably extending as far as under the filling station (9), is assigned to the draining station (19).

7. The coating device in accordance with Claim 6, **characterised in that** pumping means are provided, with which impregnation agent (12) can be pumped out of the collecting vessel (15) and supplied back to the filling station (9).

8. The coating device in accordance with one of the preceding claims, **characterised in that** a cleaning station (23) is assigned to the means of conveyance (8), at which the means of conveyance (8) can be cleaned of adhering impregnation agent (12) as it passes through.

9. The coating device in accordance with one of the preceding claims, **characterised in that** placement equipment (24) is provided for the automatic placement of composite pulp honeycomb support elements (1) that are to be coated onto the means of conveyance (8), and/or stacking means (27) are provided for the automatic stacking of coated composite pulp honeycomb support elements (1).

10. The coating device in accordance with Claim 9, **characterised in that** transfer means (25) are assigned to the stacking means (27), with which coated composite pulp honeycomb support elements (1) can be arranged from the means of conveyance (8) on stacking sheets (26), in particular plastic sheets.

11. A coating method for the purpose of coating composite pulp honeycomb support elements (1), each having a multiplicity of passages (5, 6) extending in an axial direction, with an impregnation coating for the purpose of increasing the fire and/or water resistance and/or the mechanical stability, in particular a cement-water mixture and/or an inorganic suspension, preferably using a device in accordance with one of the preceding claims, wherein the composite pulp honeycomb support elements (1) are transported in a direction of feed along a filling station (9), at which, in particular at atmospheric pressure, impregnation agent (12) is filled from above, in particular by pouring, preferably exclusively under the action of gravity, into the passages (5, 6) of the composite pulp honeycomb support elements (1), **characterised in that** the composite pulp honeycomb support elements (1) are transported along damming agents provided in the region of the filling station (9), with which the flow of the impregnation agent (12) out of the passages (5, 6) downwards is prevented, or at least slowed down, such that the impregnation agent (12) builds up in the passages (5, 6), in particular as far as an upper face of the composite pulp honeycomb support elements (1), and **in that** a draining station (19) is arranged downstream of the filling station (9) in the direction of feed, at which draining station excess impregnation agent (12) drains out of the passages (5, 6) of the composite pulp honeycomb support elements (1), and **in that** the composite pulp honeycomb support elements (1) are vibrated in the region of the draining station (19).

12. The coating method in accordance with Claim 11, **characterised in that** at the filling station (9) the impregnation agent (12) is built up in the passages (5, 6) to the extent that the surface of the composite pulp honeycomb support elements (1) is covered in the filling region by the impregnation agent (12), preferably such that the height of the impregnation agent above the surface of the composite pulp honeycomb support elements (1) in the filling region is at least 0.5 cm.

13. The coating method in accordance with one of the Claims 11 or 12, **characterised in that** at the draining station (19) excess impregnation agent (12) flows downwards through passageways (14) in the means of conveyance (8) for the composite pulp honeycomb support elements (1).

14. The use of a coating device in accordance with one of the Claims 1 to 10, for the purpose of coating composite pulp honeycomb support elements (1) with impregnation agent (12), in particular using a method in accordance with one of the Claims 11 to 13.

## Revendications

1. Dispositif de revêtement pour le revêtement de pièces portantes composites en nid d'abeilles en cellulose (1) présentant chaque fois une multiplicité de canaux (5, 6) s'étendant en direction axiale avec un revêtement d'imprégnation afin d'augmenter la résistance au feu et/ou à l'eau et/ou la stabilité mécanique, en particulier un mélange ciment-eau et/ou une suspension inorganique, dans lequel il est prévu des moyens de transport (8), avec lesquels les pièces portantes composites en nid d'abeilles en cellulose (1) sont transportées dans une direction de transport le long d'une station de remplissage (9), qui est configurée de telle manière qu'un agent d'imprégnation (12) puisse être introduit avec celle-ci par le haut dans les canaux (5, 6) des pièces portantes composites en nid d'abeilles en cellulose (1),
**caractérisé en ce**
**qu'**il est prévu dans la région de la station de remplissage (9) des moyens de retenue (16), le long desquels les pièces portantes composites en nid d'abeilles en cellulose peuvent être transportées, et en ce que les moyens de retenue (16) sont configurés de telle manière que l'écoulement vers le bas de l'agent d'imprégnation (12) hors des canaux (5, 6) soit empêché ou au moins ralenti, de telle manière que l'agent d'imprégnation (12) puisse s'accumuler dans les canaux (5, 6), en particulier jusqu'à un côté supérieur des pièces portantes composites en nid d'abeilles en cellulose (1) et en ce qu'une station de vidange (19) est disposée en aval de la station de remplissage (9) dans la direction de transport, dans laquelle l'excédent d'agent d'imprégnation (12) peut s'écouler hors des canaux (5, 6) des pièces portantes composites en nid d'abeilles en cellulose (1), et
en ce qu'il est prévu à la station de vidange (19), des moyens de vibration (20) comprenant de préférence des rouleaux vibrants (20), pour la mise en oscillation des pièces portantes composites en nid d'abeilles en cellulose (1) afin de soutenir, en particulier d'accélérer l'opération de vidange.

2. Dispositif de revêtement selon la revendication 1,
**caractérisé en ce**
**qu'**il est prévu, avant la station de remplissage (9) dans la direction de transport, une station d'humidification (21) comprenant de préférence des moyens de pulvérisation destinés à pré-humidifier les canaux (5, 6), de préférence avec de la vapeur et/ou de l'eau chaude, avant le remplissage avec l'agent d'imprégnation (12) à la station de remplissage (9).

3. Dispositif de revêtement selon l'une quelconque des revendications précédentes,
**caractérisé en ce**
**que** les moyens de transport (8) présentent des ouvertures de passage (14), à travers lesquelles l'excédent d'agent d'imprégnation (12) peut s'écouler vers le bas dans la région de la station de vidange (19).

4. Dispositif de revêtement selon l'une quelconque des revendications précédentes,
**caractérisé en ce que**
les moyens de transport (8) comprennent des rouleaux de transport espacés dans la direction de transport et/ou une bande transporteuse, qui comprennent des supports de dépôt (18) de préférence espacés dans la direction de transport, pour les pièces portantes composites en nid d'abeilles en cellulose (1).

5. Dispositif de revêtement selon l'une quelconque des revendications précédentes,
**caractérisé en ce**
**que** les moyen de retenue (16) comprennent un élément plat, en particulier un élément de plaque, de préférence une tôle de retenue, qui est disposée de préférence en dessous des moyens de transport (8), de telle manière que l'agent d'imprégnation (12) puisse être retenu à travers les moyens de transport (8) dans les canaux (5, 6).

6. Dispositif de revêtement selon l'une quelconque des revendications précédentes,
**caractérisé en ce**
**qu'**un récipient de collecte (15), s'étendant de préférence jusqu'en dessous de la station de remplissage (9), est associé à la station de vidange (19).

7. Dispositif de revêtement selon la revendication 6,
**caractérisé en ce**
**qu'**il est prévu des moyens de pompe, avec lesquels l'agent d'imprégnation (12) peut être pompé hors du récipient de collecte (15) et renvoyé à la station de remplissage (9).

8. Dispositif de revêtement selon l'une quelconque des revendications précédentes,
**caractérisé en ce**
**qu'**une station de nettoyage (23) est associée aux moyens de transport (8), dans laquelle les moyens de transport (8) peuvent être débarrassés en continu de l'agent d'imprégnation adhérent (12).

9. Dispositif de revêtement selon l'une quelconque des revendications précédentes,
**caractérisé en ce**
**qu'**il est prévu une station de chargement (24) pour le chargement automatique de pièces portantes composites en nid d'abeilles en cellulose (1) à revêtir sur les moyens de transport (8) et/ou des moyens d'empilement (27) pour l'empilement automatique de pièces portantes composites en nid d'abeilles en cellulose (1) revêtues.

10. Dispositif de revêtement selon la revendication 9,
**caractérisé en ce**
**que** des moyens de transfert (25) sont associés aux moyens d'empilement (27), avec lesquels des pièces portantes composites en nid d'abeilles en cellulose (1) revêtues peuvent être disposées sur des plateaux d'empilement (26), en particulier des plateaux en matière plastique à partir des moyens de transport (8).

11. Procédé de revêtement pour le revêtement de pièces portantes composites en nid d'abeilles en cellulose (1) présentant chaque fois une multiplicité de canaux (5, 6) s'étendant en direction axiale avec un revêtement d'imprégnation afin d'augmenter la résistance au feu et/ou à l'eau et/ou la stabilité mécanique, en particulier un mélange ciment-eau et/ou une suspension inorganique, de préférence en utilisant un dispositif selon l'une quelconque des revendications précédentes, dans lequel on transporte les pièces portantes composites en nid d'abeilles en cellulose (1) dans une direction de transport le long d'une station de remplissage (9) dans laquelle on verse un agent d'imprégnation (12) par le haut, en particulier par coulée, de préférence exclusivement par gravité, en particulier à la pression atmosphérique, dans les canaux (5, 6) des pièces portantes composites en nid d'abeilles en cellulose (1),
**caractérisé en ce**
**que** l'on transporte les pièces portantes composites en nid d'abeilles en cellulose le long de moyens de retenue (16) prévus dans la région de la station de remplissage (9), avec lesquels on empêche ou au moins on ralentit l'écoulement de l'agent d'imprégnation (12) vers le bas hors des canaux (5, 6), de telle manière que l'agent d'imprégnation (12) s'accumule dans les canaux (5, 6), en particulier jusqu'à un côté supérieur des pièces portantes composites en nid d'abeilles en cellulose (1) et en ce qu'une station de vidange (19) est disposée en aval de la station de remplissage (9) dans la direction de transport, dans laquelle l'excédent d'agent d'imprégnation (12) s'écoule hors des canaux (5, 6) des pièces portantes composites en nid d'abeilles en cellulose (1), et en ce que l'on soumet les pièces portantes composites en nid d'abeilles en cellulose (1) à des vibrations dans la région de la station de vidange (19).

12. Procédé de revêtement selon la revendication 11,
**caractérisé en ce**
**que** l'agent d'imprégnation (12) s'accumule dans les canaux (5, 6) à la station de remplissage (9) dans la mesure où la surface des pièces portantes composites en nid d'abeilles en cellulose (1) est recouverte par l'agent d'imprégnation (12) dans la région de remplissage, de préférence de telle manière que la hauteur de l'agent d'imprégnation sur la surface des pièces portantes composites en nid d'abeilles en cellulose (1) vaille au moins 0,5 cm dans la région de remplissage.

13. Procédé de revêtement selon l'une des revendications 11 ou 12,
**caractérisé en ce**
**que** l'excédent d'agent d'imprégnation (12) s'écoule vers le bas à la station de vidange (19) à travers des ouvertures de passage (14) dans des moyens de transport (8) pour les pièces portantes composites en nid d'abeilles en cellulose (1).

14. Utilisation d'un dispositif de revêtement selon l'une quelconque des revendications 1 à 10 pour le revêtement de pièces portantes composites en nid d'abeilles en cellulose (1) avec un agent d'imprégnation (12), en particulier en utilisant un procédé selon l'une quelconque des revendications 11 à 13.
